# EUROPEAN PATENT APPLICATION

(11) **EP 4 471 311 A1**
(43) Date of publication of application: **04.12.2024**
(21) Application number: 23176313.7
(22) Date of filing: 31.05.2023
(51) Int. Cl.: F16L 3/01, B64D 13/00

(54) **INDIVIDUAL AIR SUPPLY DUCT AND INDIVIDUAL AIR SUPPLY ASSEMBLY**

(71) Applicant: Airbus Operations GmbH, 21129 Hamburg (DE)
(72) Inventor: Petersen, Lauritz, 21129 Hamburg (DE); Benthien, Hermann, 21129 Hamburg (DE); Schneider, Uwe, 21129 Hamburg (DE); Müller, Florian, 21129 Hamburg (DE)

(57) **Abstract**

Individual air supply duct (3) for connecting a main air supply duct (7) to a passenger service unit (9) in an aircraft, wherein the duct (3) is an extruded profile with a longitudinal extension direction (x). Individual air supply assembly (39) comprising the duct (3) and a passenger service unit (9) configured to be mounted thereto, wherein the duct (3) comprises individual connection ports (15), being located on the outer surface of the duct (3) and at equal intervals along the duct (3), wherein the passenger service unit (9) comprises a port (45), being located on the outer surface of the passenger service unit (9), and wherein, when the passenger service unit (9) is mounted to the duct (3), the port (45) is brought into close proximity and into alignment with a corresponding connection port (15).

## Description

### Technical Field

The present disclosure provides an individual air supply duct for connecting a main air supply duct to a passenger service unit in an aircraft, and an individual air supply assembly with such air supply duct.

### Background

An individual air supply duct is located in proximity to the overhead storage compartments of an aircraft. Generally, several individual air supply ducts are connected to each other to form an individual air supply duct line. This individual air supply duct line has the sole purpose of leading air from riser ducts, which are connected to main air supply ducts, to gaspers of individual air panels of passenger service units located above passenger seats.

Currently an individual air supply duct is made of a rigid material and has the shape of a straight circular-cylindrical pipe with port structures protruding in pairs laterally from the outer surface of the individual air supply duct at different angles. The angles are such that the two port structures of each port structure pair protrude away from each other symmetrically to a cross-sectional plane of the individual air supply duct, wherein said cross-sectional plane is orthogonal to the longitudinal extension direction of the straight circular-cylindrical pipe. Gaspers of an individual air panel of a passenger service unit are connected to a single rigid common manifold, which is connected to at least one of the port structures of at least one individual air supply duct via a flexible hose.

### Summary

The problem to be solved is to improve the above described current solution. This can be done by reducing at least one of the solution's complexity, weight and overall costs.

The solution is provided by the claimed individual air supply duct and the claimed individual air supply assembly.

In particular, the following provisions, describe embodiments according to the present invention:
(1) An individual air supply duct for connecting a main air supply duct to a passenger service unit of an aircraft, wherein the individual air supply duct is an extruded profile with a longitudinal extension direction.

An alternative individual air supply duct is not manufactured by extrusion. It can be manufactured by another well-known manufacturing process.

The individual air supply duct, wherein the individual air supply duct comprises a cross-section, which is orthogonal to the longitudinal extension direction, with a circular inner circumference.

Alternatively, the inner circumference may not be circular. The cross-section lies in a plane that is orthogonal to the longitudinal extension direction, which may be a direction in an x-axis. The cross-sectional plane may lie in a yz-plane, which extends in a y-axis and a z-axis direction.

The individual air supply duct may comprise a straight circular-cylindrical pipe, which forms an inner portion of the individual air supply duct. An outer portion of the individual air supply duct may extend radially outward from the inner portion to at least partially circumscribe the inner portion.

(2) The individual air supply duct, wherein the individual air supply duct comprises an outer rail structure extending along the longitudinal extension direction.

The longitudinal extension direction is the longitudinal extension direction of the individual air supply duct. The longitudinal extension direction may be a direction in an x-axis.

The individual air supply duct, wherein the individual air supply duct comprises a cross-section, which is orthogonal to the longitudinal extension direction, with a curved outer surface portion, which includes the outer rail structure. The outer portion may comprise the outer rail structure.

Alternatively, the curved outer surface portion may not be curved. The cross-section lies in a plane that is orthogonal to the longitudinal extension direction, which may be a direction in an x-axis. The cross-sectional plane may lie in a yz-plane, which extends in a y-axis and a z-axis direction. The curved outer surface portion may have a constant curvature radius. The curved outer surface portion may be semicircular. The outer rail structure may be formed by a gap in the outer surface portion. The gap may be formed in the center of the outer surface portion. The longitudinal center of the gap may lie in an xy-plane, in which the centerline of the individual air supply duct lies. The gap may cross-sectionally extend to form an open recess in the individual air supply duct. The open recess may be symmetrical to an xy-plane, in which the centerline of the individual air supply duct lies, e.g. it may be T-shaped.

(3) The individual air supply duct, wherein the individual air supply duct comprises an edge for attachment of a passenger service unit or a spacer element.

The edge may form a snap and/or hinge part, to which a passenger service unit can be attached and, for example, pivoted around. The edge / attachment part may extend in parallel to the longitudinal direction of the individual air supply duct, e.g. in the longitudinal direction of the inner portion, i.e. in the direction of an x-axis. While the rail structure may be on one side of the individual air supply duct, the edge / attachment part may be on the opposite side of the individual air supply duct. The edge / attachment part may define a rotation axis in the direction of the x-axis that may be a fixed part of the individual air supply duct. Therefore, said rotation axis can be used as a y-axis and z-axis reference, e.g. for installation and maintenance, for a passenger service unit. Additionally or alternatively, the edge / attachment part may be configured to conduct electrical energy or signals, e.g. providing power supply, grounding or signals, e.g. for an interlock test or an emergency oxygen mask container opening.

(4) The individual air supply duct, wherein the individual air supply duct comprises individual connection ports, being located on the outer surface of the individual air supply duct and at equal intervals along the individual air supply duct.

The individual air supply duct may comprise an inner portion with a centerline, wherein the inner portion may be a straight circular-cylindrical pipe. The centerline may extend in the direction of an x-axis. Individual connection ports, which may be circular through holes, are located on the outer surface of the inner portion. These individual connection ports may extend in parallel to each other, each along its own centerline in the direction of a y-axis, i.e. orthogonal to the centerline of the inner portion. The centerlines of the individual connection ports may intersect the centerline of the inner portion, i.e. the centerlines of the individual connection ports and the inner portion may lie in a common plane, i.e. an xy-plane. Further, the centerlines of the individual connection ports may be located at equal intervals in a direction of the longitudinal direction of the individual air supply duct, i.e. in the direction of the centerline of the inner portion, i.e. in the direction of the x-axis. The individual connection ports may be configured to provide a functional connection between the inside and the outside of the individual air supply duct and/or its inner portion.

(5) An individual air supply assembly comprising: the individual air supply duct, and a passenger service unit configured to be mounted thereto, wherein the individual air supply duct comprises individual connection ports, being located on the outer surface of the individual air supply duct and at equal intervals along the individual air supply duct, wherein the passenger service unit comprises a port, being located on the outer surface of the passenger service unit, and wherein, when the passenger service unit is mounted to the individual air supply duct, the port is brought into its closest proximity and/or into alignment with a corresponding connection port.

The individual connection ports may be through holes or electrical contacts. The through holes may extend from the inside and the outside of the individual air supply duct. The electrical contacts may connect an electrical component on the inside of the individual air supply duct with the outside of the individual air supply duct.

(6) The individual air supply assembly, wherein the individual connection port and the port form a plug and socket connection, when the passenger service unit is mounted to the individual air supply duct.

Mounted means that the passenger service unit is attached and in a mounted state relative to the individual air supply duct. The individual connection port may form the socket and the port may form the plug.

(7) The individual air supply assembly, further comprising: at least one spacer element, wherein the spacer element is configured to be mounted to the individual air supply duct and to cover at least one of the individual connection ports, when the spacer element is mounted to the individual air supply duct.

(8) The individual air supply assembly, wherein the spacer element is pivotable between an unmounted state, in which the spacer element can freely pivot relative to the individual air supply duct, and a mounted state, in which the spacer element is in a fixed position relative to the individual air supply duct.

The spacer element may be similar in shape and dimensions, for example in the direction of the y-axis and z-axis, to the passenger service unit. However, it may lack any of the ports of the passenger service unit. It may be part of the individual air supply assembly. In particular, the spacer element may be configured to be mounted to the individual air supply duct and to cover at least one of the individual connection ports, when the spacer element is mounted to the individual air supply duct, i.e. attached and in the mounted state. In other words, the spacer element is configured to protect and/or seal the at least one individual connection port. For sealing, the spacer element may comprise the sealant described below, which may be an integral part of the spacer element or attached to the spacer element.

(9) The individual air supply assembly, wherein the individual air supply duct encloses at least one of: an emergency oxygen sub-duct, a fluid duct, a fiber optic cable, and/or an electrical cable.

At least one of the emergency oxygen sub-duct, the fluid duct, the fiber optic cable, and/or the electrical cable is connected to at least one individual connection port.

(10) The individual air supply assembly, wherein the passenger service unit is pivotably attached to the individual air supply duct, and wherein the passenger service unit is pivotable between an unmounted state, in which the passenger service unit can freely pivot relative to the individual air supply duct, and a mounted state, in which the passenger service unit is in a fixed position relative to the individual air supply duct.

The attachment can be a permanent or non-permanent snap connection. For example, a snap & click connection.

An alternative individual air supply assembly may comprise: two individual air supply ducts, and a joint connector in between connecting the two individual air supply ducts. The joint connector may be flexible, i.e. stretchable and compressible and/or comprises a defined flexibility, in the longitudinal direction, i.e. in the direction of the x-axis, of the individual air supply ducts. The joint connector can fixedly or flexibly attach the two individual air supply ducts at different rotary angles about their colinear centerline. This alternative air supply assembly may further comprise feature of the air supply assembly previously described.

A sealant may be provided between the individual air supply duct and the passenger service unit such that it surrounds the passage between their respective ports. A sealant may be attached to the passenger service unit and/or be attached to the individual air supply duct. The sealant can be any type of air impermeable or fluid impermeable sealant, for example a well-known plastic sealing ring. So, with the sealant being part of the individual air supply assembly and being sandwiched by the passenger service unit and the individual air supply duct in the mounted state of the passenger service unit, an automatic sealing is achieved in the mounted state of the passenger service unit.

Further, any features pertaining to the individual air supply duct and not to the passenger service unit or the spacer element may further define the individual air supply duct.

An air supply tubing may include multiple interconnected individual air supply ducts or individual air supply assemblies. Further, an aircraft may include the air supply tubing, at least one of the individual air supply ducts or the individual air supply assemblies.

### Brief Description of the Drawings

The foregoing summary, as well as the following detailed description, will be better understood when read in conjunction with the appended drawings. For the purposes of illustrating the present disclosure, preferred embodiments are shown in the drawings. It should be understood, however, that the invention is not limited to the specific embodiments disclosed, and reference is made to the claims for that purpose. In the drawings:
- Fig. 1: is a top view of a cross-section through an aircraft showing individual air supply ducts and riser ducts;
- Fig. 2: is a front view of a cross-section through the aircraft illustrated in Fig. 1 showing the individual air supply ducts, the riser ducts and main supply ducts;
- Fig. 3: is a perspective top view of an individual air supply duct;
- Fig. 4: is a side view of the individual air supply duct illustrated in Fig. 3;
- Fig. 5: is a longitudinal cross-section through two of the individual air supply ducts, which are connected via a joint connector;
- Fig. 6: is the perspective top view of an individual air supply assembly with the individual air supply duct illustrated in Fig. 3 and a passenger service unit that is partially shown, attached to the individual air supply duct and in a mounted state;
- Fig. 7: is a schematic top view of the individual air supply assembly of Fig. 6;
- Fig. 8: is a schematic side view of the individual air supply assembly of Fig. 7, wherein the passenger service unit is in the mounted state;
- Fig. 9: is a schematic side view of the individual air supply assembly of Fig. 8, wherein the passenger service unit is in an unmounted state; and
- Fig. 10: is a schematic side view of another individual air supply assembly with another individual air supply duct and the passenger service unit.

### Detailed Description

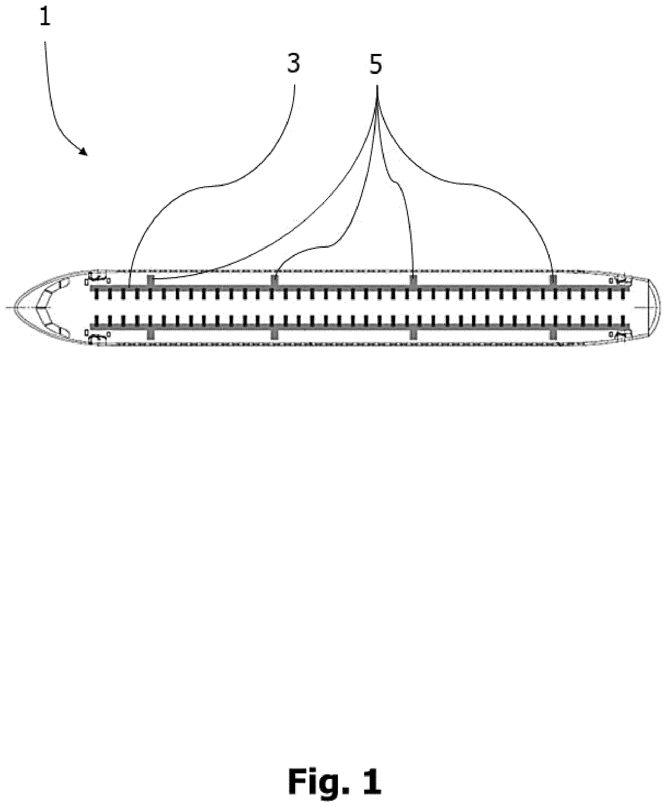

Fig. 1 is a top view of a cross-section through an aircraft 1 showing individual air supply ducts 3 and riser ducts 5.

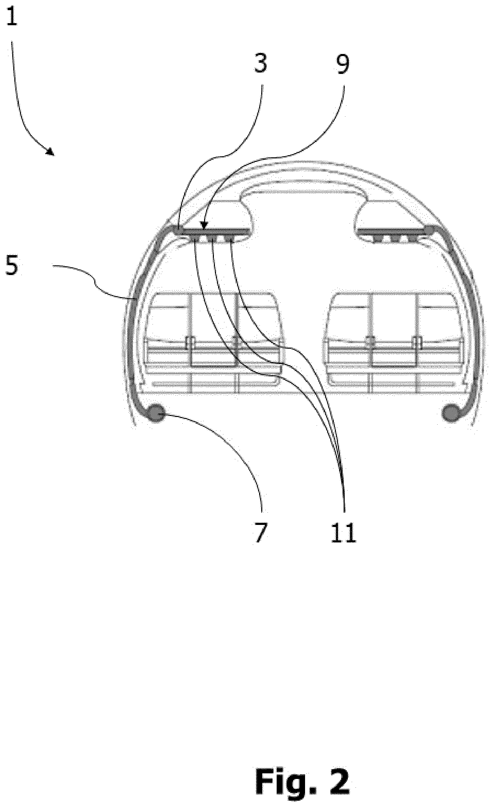

Fig. 2 is a front view of a cross-section through the aircraft 1 illustrated in Fig. 1 showing the individual air supply ducts 3, the riser ducts 5 and additionally main supply ducts 7. The main supply ducts 7 extend through the aircraft underneath passenger seats of the aircraft 1. The riser ducts 5 extend from underneath the passenger seats to above the passenger seats to connect the main supply ducts 7 and the individual air supply ducts 3. The individual air supply ducts 3 extend above the passenger seats. The individual air supply ducts 3, the riser ducts 5 and the main supply ducts 7 are connected such that air can be supplied from the main supply ducts 7, further through the riser ducts 5 and the individual air supply ducts 3 to passenger service units 9 and gaspers 11 included therein, wherein the gaspers 11 are passenger adjustable air outlets situated above the passenger seats. Of course, the passenger service units 9 may comprise lights or other electric components in addition to or instead of the gaspers 11.

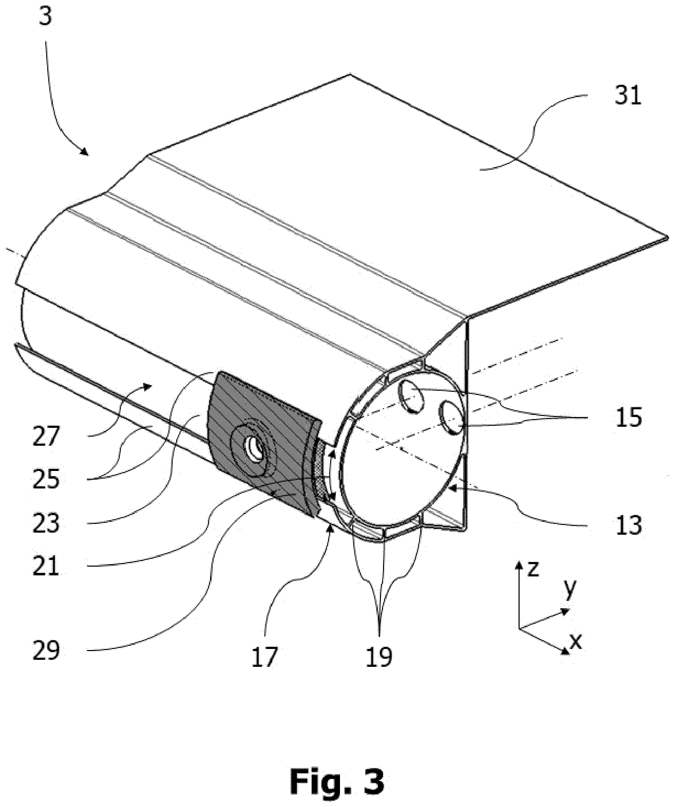

Fig. 3 is a perspective top view of an individual air supply duct 3. Here, the individual air supply duct 3 is an extruded profile with a longitudinal extension in the direction of an x-axis. Consequently, the extrusion direction of such individual air supply duct 3 is in the direction of the x-axis as well.

The individual air supply duct 3 is a monolithic part, which has two functionally distinct portions, which will be described next.

An inner portion 13 of the individual air supply duct 3 is a straight circular-cylindrical pipe with a centerline, which extends in the direction of the x-axis. Individual connection ports 15, which in Fig. 3 are circular through holes, are located on the outer surface of the inner portion 13. These individual connection ports 15 extend in parallel to each other, each along its own centerline in the direction of the y-axis. The centerlines of the individual connection ports 15 intersect the centerline of the inner portion 13. Further, the centerlines of the individual connection ports 15 are located at equal intervals on the same xy-plane, in which the centerline of the inner portion 13 lies. The individual connection ports 15 are configured to provide a functional connection between the inside and the outside of the individual air supply duct 3.

An outer portion 17 of the individual air supply duct 3 extends outward, here radially outward, from the inner portion 13 to at least partially or fully circumscribe the inner portion 13. Here, the outer portion 17 has an Ω-like cross-section in the yz-plane and is connected to the inner portion 13 via ribs 19. A gap 21 in the outer portion 17 extending in the direction of the x-axis forms an open recess 23, which in this case is T-like in the yz-plane, wherein "like" means generally "shaped". The open recess 23 is symmetrical to the xy-plane, in which the centerlines of the inner portion 13 and the centerlines of the individual connection ports 15 lie. In other words, the individual connection ports 15 and the open recess 23 are on opposite sides of the individual air supply duct 3, here even on diametrically opposite sides of the individual air supply duct 3, i.e. the inner portion 13. Thereby, two protrusions 25 are provided in the outer portion 17, wherein these protrusions 25 are symmetrical to said xy-plane and extend towards each other with equidistant ends to form a rail structure 27 extending in the direction of the x-axis. This rail structure 27 is configured to hold a slider 29, here a nut slider 29, movably in the direction of the x-axis. The slider 29 is configured to attach the individual air supply duct 3 to other structural components of the aircraft 1. It may provide such attachment in a loose form fit. Said slider 29 is configured to hold the individual air supply duct 3 such that the individual air supply duct 3 is only moveable along the direction of the x-axis. A plate 31 extending from an edge of the Ω-shaped outer portion 17 in a plane parallel to the above-mentioned xy-plane may or may not be provided.

In other words, the individual air supply duct 3 comprises an outer rail structure 27 that extends along the longitudinal extension direction of the individual air supply duct 3, i.e. in the direction of the x-axis. The outer rail structure 27 is configured to provide a floating connection of the individual air supply duct 3 to other structural components of the aircraft 1 in the direction of the x-axis, which floating can compensate for a shrinkage in an aircraft 1. The individual air supply duct 3 comprises a cross-section, which is orthogonal to the longitudinal extension direction of the individual air supply duct 3, i.e. in the yz-plane, with a curved outer surface portion, which includes the outer rail structure 27. The curved outer surface portion may have a constant curvature radius.

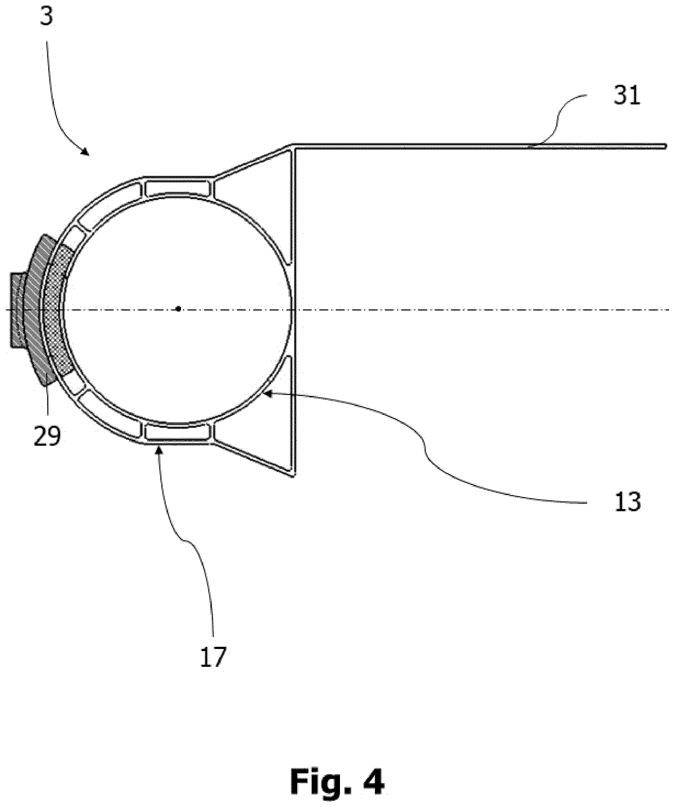

Fig. 4 is a side view of the individual air supply duct 3 illustrated in Fig. 3. Here the circular-cylindrical inner portion 13 and the Ω-like outer portion 17 are shown even better. In fact, the individual air supply duct 3 is Ω-like with a closed Ω basis and walls connecting the opposite ends of the Ω basis with the rest of the Ω body.

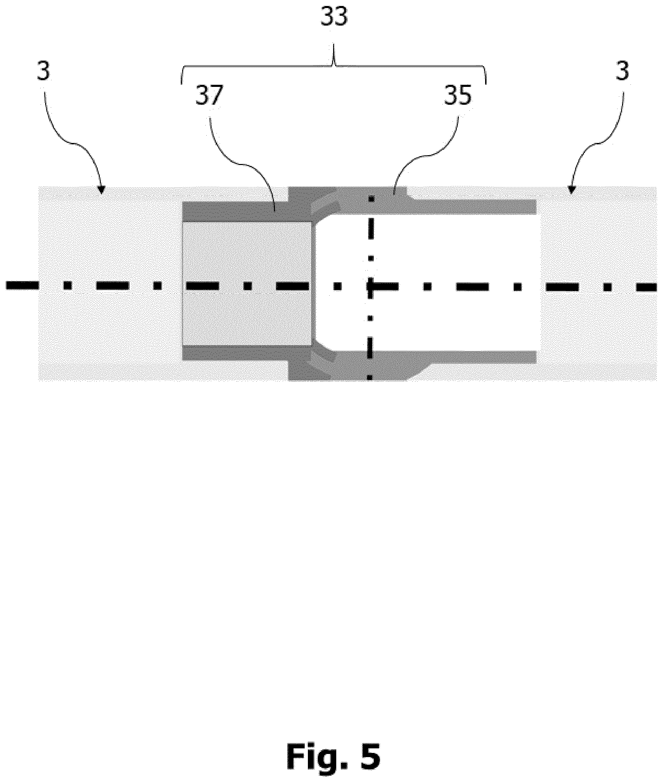

Fig. 5 is a longitudinal cross-section through two of the individual air supply ducts 3, which are connected via a joint connector 33. The joint connector 33 comprises a male connector part 35, which is at least in the direction of the x-axis fixedly attached to the longitudinal end of one of the two colinear individual air supply ducts 3, and a female connector part 37, which is at least in the direction of the x-axis fixedly attached to the longitudinal end of the other one of the two colinear individual air supply ducts 3. Thereby, two colinear individual air supply ducts 3 can be attached to each other via an attachment of the male connector part 35 to the female connector part 37. The attachment can be a permanent or non-permanent snap connection. For example, a snap & click connection. Since the joint connector 33 connects the inner portions 13 of the individual air supply ducts 3, the circular-cylindrical shape of the inner portion 13 allows an easy and fast rotary connection and adjustment between two individual air supply ducts 3. In other words, two individual air supply ducts 3 can be fixedly or flexibly attached to each other by means of the joint connector 33 at different rotary angles about their colinear centerline. The joint connector 33 is flexible, i.e. stretchable and compressible and/or comprises a defined flexibility, in the longitudinal direction, i.e. in the direction of the x-axis, of the individual air supply ducts 3 it connects, so that it can compensate for movement of the individual air supply ducts 3 in said direction.

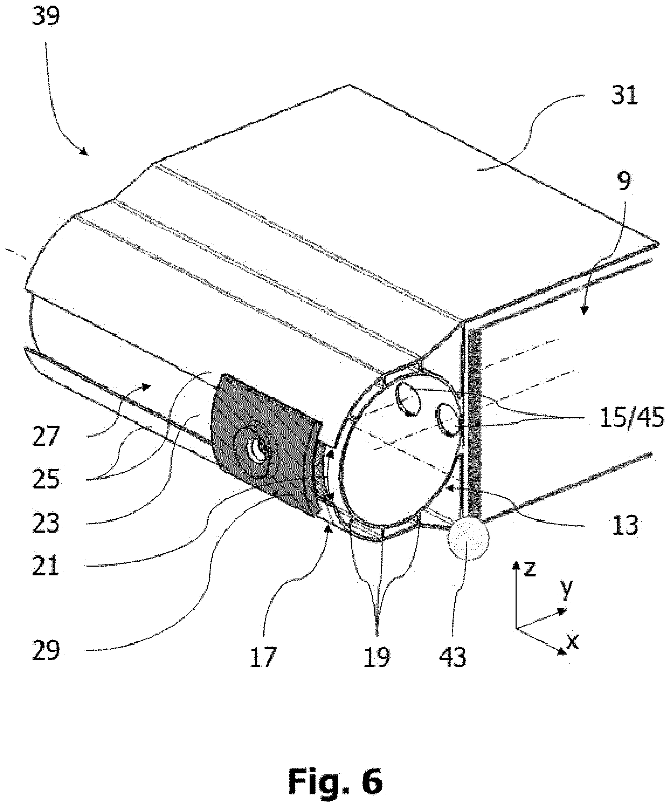

Fig. 6 is the perspective top view of an individual air supply assembly 39 with the individual air supply duct 3 illustrated in Fig. 3 and the passenger service unit 9 that is partially shown, attached to the individual air supply duct 3 and in a mounted state. The attachment can be a permanent or non-permanent snap connection. For example, a snap & click connection. Permanent means that its removal will cause damage. Non-permanent means that its removal will not cause damage. The mounted state describes a state in which the passenger service unit 9 is in a fixed position relative to the individual air supply duct 3. Here, the passenger service unit 9 is pivotably attached to an edge 43 of the Ω-shaped outer portion 17, which differs from the edge of the Ω-shaped outer portion 17, from which the plate 31 extends. In the mounted state, ports 45 of the passenger service unit 9 are brought into their closest proximity to corresponding individual connection ports 15 of the individual air supply duct 3. Said ports 45 of the passenger service unit 9 are in Fig. 6 circular through holes, which correspond in diameter and arrangement, i.e. intervals in the direction of the x-axis, to the individual connection ports 15 of the of the individual air supply duct 3, and are located on an outer surface of the passenger service unit 9 facing the individual air supply duct 3. Alternatively, said ports 15, 45 may form a plug and socket connection in the mounted state of the passenger service unit 9. Said edge 43 forms a snap and/or hinge part, to which the passenger service unit 9 can be attached and, in this case, pivoted around. The edge 43 / attachment part extends in parallel to the longitudinal direction of the individual air supply duct 3 and the inner portion 13, i.e. in the direction of the x-axis. While the rail structure 27 is on one side of the individual air supply duct 3, the edge 43 / attachment part is on the opposite side of the individual air supply duct 3. The edge 43 / attachment part defines a rotation axis in the direction of the x-axis that is a fixed part of the individual air supply duct 3. Therefore, said rotation axis can be used as a y-axis and z-axis reference, e.g. for installation and maintenance, for the passenger service unit 9. Additionally or alternatively, the edge 43 / attachment part may be configured to conduct electrical energy or signals. This can ensure a permanent energy or signal transfer between the individual air supply duct 3 and a passenger service unit 9, or spacer element described below, attached thereto, regardless of the state, e.g. mounted or unmounted, of the passenger service unit 9 or spacer element. Thereby, power supply, grounding or signals, e.g. for an interlock test or an emergency oxygen mask container opening, can be provided.

In other words, the individual air supply assembly 39 comprises: the individual air supply duct 3, and the passenger service unit 9 configured to be mounted thereto, wherein the individual air supply duct 3 comprises individual connection ports 15, being located on the outer surface of the individual air supply duct 3 and at equal intervals along the individual air supply duct 3, and wherein the passenger service unit 9 comprises a port 45 or at least one port, preferably 2 or more ports 45, being located on the outer surface of the passenger service unit 9, and wherein, when the passenger service unit 9 is mounted to the individual air supply duct 3, i.e. in a mounted state, the port 45/ports 45 is/are brought into its/their closest proximity and/or into alignment with a corresponding individual connection port 15/ corresponding individual connection ports 15. Further, the individual connection port 15 and the port 45 may be brought into contact with each other, when the passenger service unit 9 is in the mounted state. Thereby, a continuous air interface for air distribution to the passenger service units 9 independent from their position in the direction of the x-axis is provided.

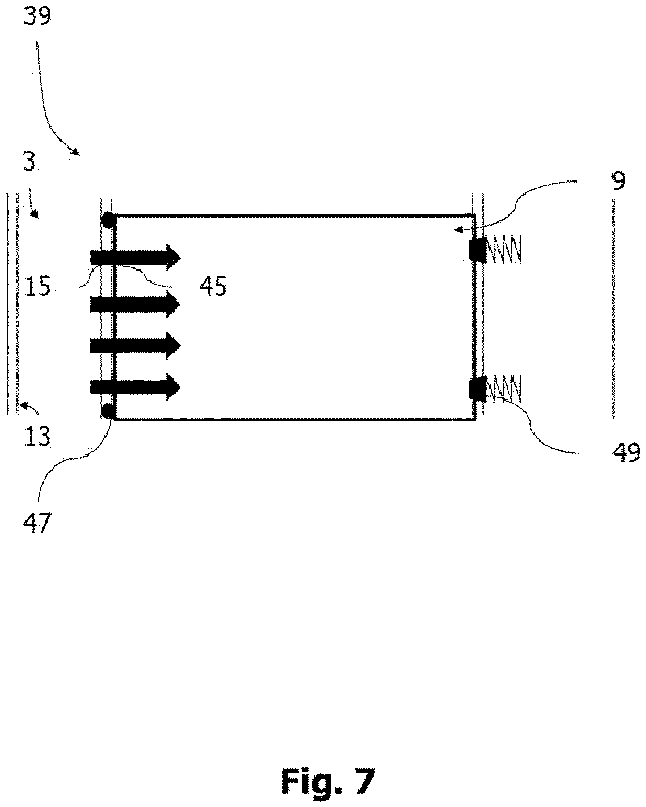

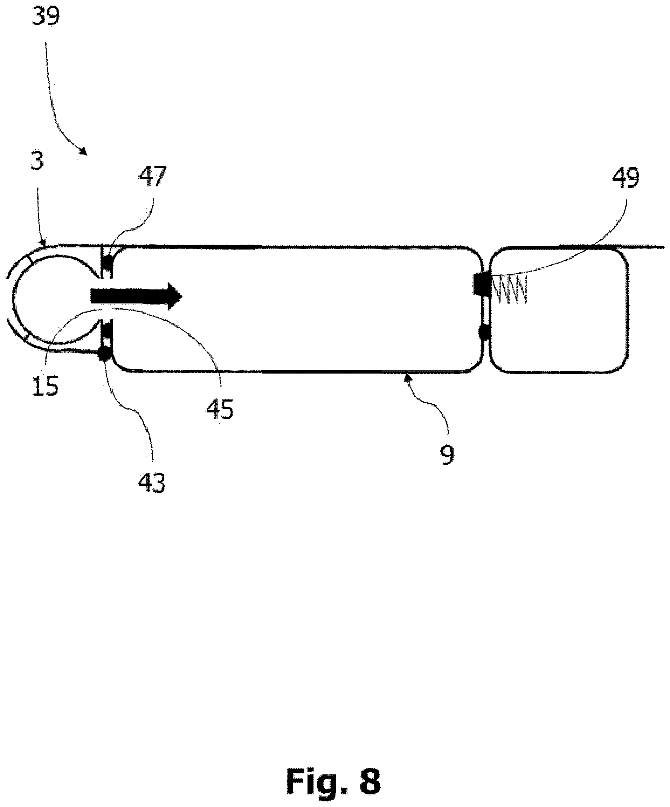

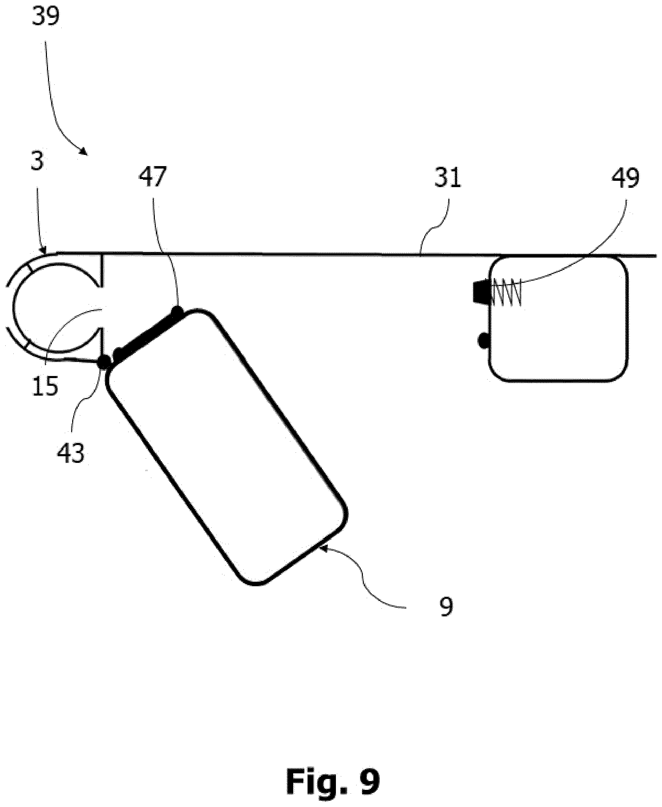

Fig. 7 is a schematic top view of the individual air supply assembly 39 of Fig. 6. Here, the airflow between the individual connection ports 15 of the individual air supply duct 3 and the ports 45 of the passenger service unit 9 is shown by means of horizontal arrows, which indicated the airflow through each pair of their ports 15, 45. In order to ensure that all of the air from the inner portion 13 enters the passenger service unit 9 through the ports 15, 45, a sealant 47 is provided between the individual air supply duct 3 and the passenger service unit 9 such that it surrounds the passage between their respective ports 15, 45. Further, in the shown mounted state, the passenger service unit 9 is held in said mounted state by a locking mechanism 49, which is here in the form of a flexible locking pin or more specifically in the form of a spring supported locking pin. This locking mechanism 49 can be included in or attached to the individual air supply duct 3, e.g. by means of the plate 31 in Fig. 3 - see also Fig. 9, which is described below. Alternatively, the locking mechanism 49 can be included in or attached to other components of an aircraft 1 - see Fig. 8, which is described below.

Fig. 8 is a schematic side view of the individual air supply assembly 39 of Fig. 7, wherein the passenger service unit 9 is in the mounted state. This figure shows by means of the horizontal arrow that air from the individual air supply duct 3 enters the passenger service unit 9 through the ports 15, 45, the sealant 47 between the individual air supply duct 3 and the passenger service unit 9 surrounds the passage between their respective ports 15, 45. The locking mechanism 49 is configured such that it locks the passenger service unit 9 in its mounted state in a position relative to the individual air supply duct 3, wherein here the locking mechanism 49 is included in or attached to other components of an aircraft 1.

Fig. 9 is a schematic side view of the individual air supply assembly 39 of Fig. 8, wherein the passenger service unit 9 is in an unmounted state. In this state, the passenger service unit 9 can freely pivot relative to the individual air supply duct 3, here about the edge 43 of the individual air supply duct 3. While it is shown that the sealant 47 is attached to the passenger service unit 9, a sealant can alternatively or additionally be attached to the individual air supply duct 3. The sealant 47 can be any type of air impermeable or fluid impermeable sealant, for example a well-known plastic sealing ring. So, with the sealant 47 being part of the individual air supply assembly 39 and being sandwiched by the passenger service unit 9 and the individual air supply duct 3 in the mounted state of the passenger service unit 9, an automatic sealing is achieved in the mounted state of the passenger service unit 9. Thereby, no tubing between the passenger service unit 9 and the individual air supply duct 3 is necessary. This leads to a self-sealing air distribution interface, e.g. by the individual air supply duct 3, the sealant 47 and the passenger service unit 9, without tubing.

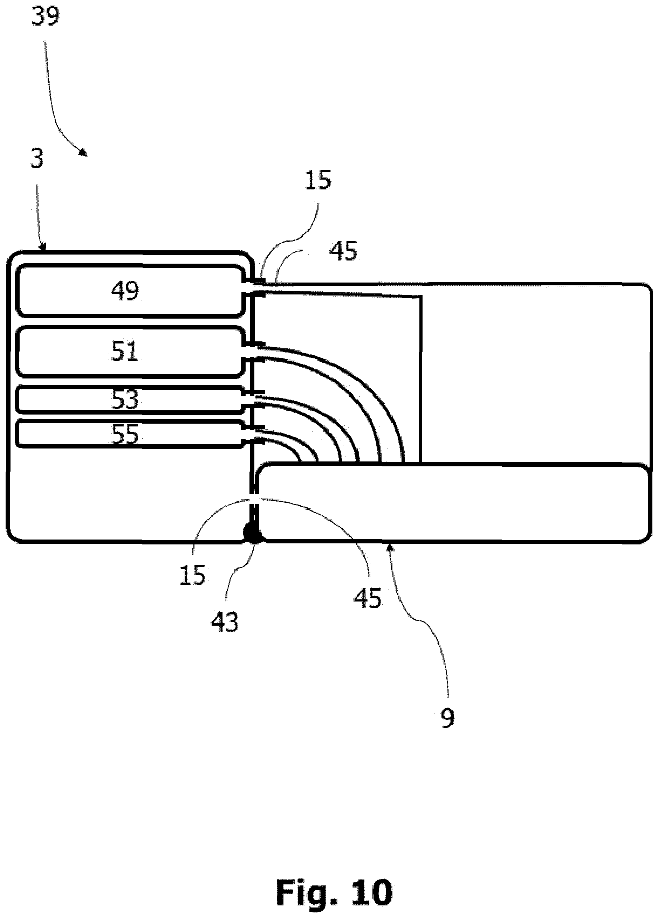

Fig. 10 is a schematic side view of another individual air supply assembly 39 with another individual air supply duct 3 and the passenger service unit 9. This individual air supply duct 3 encloses an emergency oxygen sub-duct 49, a fluid duct 51, which can be a liquid duct, e.g. a water duct, a fiber optic cable 53 and/or an electrical cable 55. Each of these components may comprise a suitable individual connection port 15 as part of the individual air supply duct 3, wherein the individual connection ports 15 may be through holes or electrical contacts. Corresponding ports 45 can achieve a connection with the respective individual connection ports 15, when the passenger service unit 9 is in its mounted state, as shown in Fig. 10. The following can be achieved thereby for example: an emergency oxygen supply for emergency oxygen piping to mask lanyards and/or a centralized oxygen system, an electrical connection with electrical features, e.g. reading light power supply or loudspeaker signals, a piping connection for all kinds of fluids, e.g. water, and/or fiber optic cable connections with data signal functions, e.g. passenger information services. Of course, when the passenger service unit 9 is in an unmounted state, for example by being pivoted about the edge 43 in a clockwise direction in Fig. 10, all of the previously connected individual connection ports 15 may be disconnected. For that purpose, as mentioned above, said ports 15, 45 may form a plug and socket connection, which is connected in the mounted state of the passenger service unit 9, as shown in Fig. 10, and which is disconnected in the unmounted state of the passenger service unit 9.

Not shown in the figures is a spacer element. The spacer element is similar in shape and dimensions, e.g. in the direction of the y-axis and z-axis, to the passenger service unit 9. However, it lacks any of the ports 45 of the passenger service unit 9. Its sole purpose is to fill a space in the direction of the x-axis following a passenger service unit 9. Therefore, its dimension in the direction of the x-axis may differ from that of the passenger service unit 9. It may further be part of the individual air supply assembly 39. In particular, the spacer element may be configured to be mounted to the individual air supply duct 3 and to cover at least one of the individual connection ports 15, when the spacer element is mounted to the individual air supply duct 3, i.e. attached and in the mounted state. Thereby, the spacer element will protect and/or seal at least one individual connection port 15. For sealing, the spacer element may comprise the sealant 47, which is an integral part of the spacer element or attached to the spacer element. The spacer element, just like the passenger service unit 9, may be pivotable between an unmounted state, in which the spacer element can freely pivot relative to the individual air supply duct 3, and a mounted state, in which the spacer element is in a fixed position relative to the individual air supply duct 3.

An air supply tubing may include multiple interconnected individual air supply ducts 3 or individual air supply assemblies 39. Further, an aircraft 1 may include the air supply tubing, at least one of the individual air supply ducts 3 or the individual air supply assemblies 39.

## Claims

1. Individual air supply duct (3) for connecting a main air supply duct (7) to a passenger service unit (9) of an aircraft,
wherein the individual air supply duct (3) is an extruded profile with a longitudinal extension direction (x).

2. Individual air supply duct (3) according to claim 1,
wherein the individual air supply duct (3) comprises an outer rail structure (27) extending along the longitudinal extension direction (x).

3. Individual air supply duct (3) according to claim 1 or 2,
wherein the individual air supply duct (3) comprises an edge (43) for attachment of a passenger service unit or a spacer element.

4. Individual air supply duct (3) according to any one of claims 1 to 3,
wherein the individual air supply duct (3) comprises individual connection ports (15), being located on the outer surface of the individual air supply duct (3) and at equal intervals along the individual air supply duct (3).

5. Individual air supply assembly (39) comprising:
- the individual air supply duct (3) according to any one of claims 1 to 4, and
- a passenger service unit (9) configured to be mounted thereto,
wherein the individual air supply duct (3) comprises individual connection ports (15), being located on the outer surface of the individual air supply duct (3) and at equal intervals along the individual air supply duct (3),
wherein the passenger service unit (9) comprises a port (45), being located on the outer surface of the passenger service unit (9), and
wherein, when the passenger service unit (9) is mounted to the individual air supply duct (3), the port (45) is brought into its closest proximity and/or into alignment with a corresponding connection port (15).

6. Individual air supply assembly (39) according to claim 5,
wherein the individual connection port (15) and the port (45) form a plug and socket connection, when the passenger service unit (9) is mounted to the individual air supply duct (3).

7. Individual air supply assembly (39) according to claim 5 or 6, further comprising:
- at least one spacer element,
wherein the spacer element is configured to be mounted to the individual air supply duct (3) and to cover at least one of the individual connection ports (15), when the spacer element is mounted to the individual air supply duct (3).

8. Individual air supply assembly (39) according to claim 7,
wherein the spacer element is pivotable between an unmounted state, in which the spacer element can freely pivot relative to the individual air supply duct (3), and a mounted state, in which the spacer element is in a fixed position relative to the individual air supply duct (3).

9. Individual air supply assembly (39) according to any one of claims 5 to 8, wherein the individual air supply duct (3) encloses at least one of:
- an emergency oxygen sub-duct (49),
- a fluid duct (51),
- a fiber optic cable (53), and/or
- an electrical cable (55).

10. Individual air supply assembly (39) according to any one of claims 5 to 9,
wherein the passenger service unit (9) is pivotably attached to the individual air supply duct (3), and
wherein the passenger service unit (9) is pivotable between an unmounted state, in which the passenger service unit (9) can freely pivot relative to the individual air supply duct (3), and a mounted state, in which the passenger service unit (9) is in a fixed position relative to the individual air supply duct (3).
